(19) **Europäisches Patentamt / European Patent Office / Office européen des brevets**

(11) **EP 4 328 022 A1**

(12) **EUROPEAN PATENT APPLICATION**
published in accordance with Art. 153(4) EPC

(43) Date of publication:
**28.02.2024 Bulletin 2024/09**

(21) Application number: **22791813.3**

(22) Date of filing: **22.04.2022**

(51) International Patent Classification (IPC):
**B32B 27/00** (2006.01)      **B32B 29/04** (2006.01)
**B65D 65/40** (2006.01)      **D21H 19/18** (2006.01)
**D21H 19/20** (2006.01)      **D21H 19/22** (2006.01)
**D21H 27/00** (2006.01)

(52) Cooperative Patent Classification (CPC):
**B32B 27/00; B32B 27/10; B32B 27/18;
B32B 29/00; B32B 29/04; B65D 65/40;
D21H 19/18; D21H 19/20; D21H 19/22;
D21H 27/00;** Y02W 30/80

(86) International application number:
**PCT/JP2022/018533**

(87) International publication number:
**WO 2022/225042 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 23.04.2021   JP 2021072952
30.11.2021   JP 2021194041

(71) Applicant: **Oji Holdings Corporation**
**Chuo-ku**
**Tokyo 104-0061 (JP)**

(72) Inventors:
• **WAKABAYASHI, Misaki**
**Tokyo 104-0061 (JP)**
• **NOISHIKI, Yasutomo**
**Tokyo 104-0061 (JP)**
• **SHAMOTO, Yuta**
**Tokyo 104-0061 (JP)**

(74) Representative: **Godemeyer Blum Lenze**
**Patentanwälte**
**Partnerschaft mbB - werkpatent**
**An den Gärten 7**
**51491 Overath (DE)**

(54) **HEAT-SEALABLE PAPER AND PACKAGING BAG**

(57)    It is an object of the present invention to provide heat-sealable paper that is excellent in heat sealing property and recyclability, and capable of enclosing the object to be packaged even immediately after the bag making process. The heat-sealable paper of the present invention has at least one heat-sealable layer on at least one surface of a paper substrate, wherein the heat-sealable layer contains a water-dispersible resin binder, when two such heat-sealable layers are heat-sealed to each other under conditions of 150°C, 0.2 MPa, and one second, the hot tack peeling distance is 150 mm or less, and the heat sealing peel strength is 2 N/15 mm or more, and the heat-sealable paper has a pulp recovery rate after re-disintegration of 85% or more.

EP 4 328 022 A1

**Description**

Technical Field

The present invention relates to heat-sealable paper and a packaging bag using the heat-sealable paper.

Background Art

Packages using a heat sealing method have been widely used for packaging foods, medicines, medical devices, etc., other than packaging general industrial products.

In recent years, the problem of plastic waste is getting worse. Of the world's plastic production amount, the packaging sector accounts for a large portion of the plastic production amount, which is one of the causes of plastic waste. Plastics do not decompose semi-permanently, and their garbage turns into microplastics in the natural environment, which has a serious adverse effect on the ecosystem. As a countermeasure, it has been proposed to replace plastics with paper.

For example, Patent Literature 1 discloses heat-sealable paper obtained by wet-papermaking a fiber mixture containing a mixture of craft pulp fibers and synthetic fibers.

Citation List

Patent Literature

Patent Literature 1: JP 6619964 B

Summary of Invention

Technical Problem

The heat-sealable paper described in Patent Literature 1 has a large amount of plastic components contained in the paper, making it difficult to recover the pulp, and is thus poor in recyclability. Further, in recent years, there has been a demand for shortening the time for packaging work, and in response to this demand, there is a demand for heat-sealable paper capable of enclosing an object to be packaged immediately after a bag making process.

It is an object of the present invention to provide heat-sealable paper that is excellent in heat sealing property and recyclability and is capable of enclosing the object to be packaged even immediately after the bag making process, and a packaging bag using the heat-sealable paper.

Solution to Problem

The object of the present invention can be achieved by the configurations of <1> to <9> below.

<1> Heat-sealable paper comprising at least one heat-sealable layer on at least one surface of a paper substrate, wherein the heat-sealable layer comprises a water-dispersible resin binder, when two such heat-sealable layers are heat-sealed to each other under conditions of 150°C, 0.2 MPa, and one second, a hot tack peeling distance is 150 mm or less, and a heat sealing peel strength is 2 N/15 mm or more, and the heat-sealable paper has a pulp recovery rate after re-disintegration of 85% or more.

<2> The heat-sealable paper according to <1>, wherein the water-dispersible resin binder has a glass transition temperature of 5°C or more and 100°C or less.

<3> The heat-sealable paper according to <1> or <2>, wherein the water-dispersible resin binder comprises one or more selected from the group consisting of a styrene/butadiene copolymer and an olefin/unsaturated carboxylic acid copolymer.

<4> The heat-sealable paper according to any one of <1> to <3>, wherein a coating amount of the heat-sealable layer is 2 g/m$^2$ or more and 20 g/m$^2$ or less.

<5> The heat-sealable paper according to any one of <1> to <4>, wherein the heat-sealable layer further comprises a lubricant.

<6> The heat-sealable paper according to <5>, wherein the lubricant is at least one selected from the group consisting of paraffin wax and carnauba wax.

<7> The heat-sealable paper according to <5> or <6>, wherein the content of the lubricant in the heat-sealable layer is 0.5 mass% or more and 30 mass% or less.

<8> The heat-sealable paper according to any one of <1> to <7>, wherein an Oken smoothness of a surface of the heat-sealable layer is 10 seconds or more.

<9> A packaging bag using the heat-sealable paper according to any one of <1> to <8>.

Advantageous Effects of Invention

According to the present invention, heat-sealable paper that is excellent in heat sealing property and recyclability and is capable of enclosing the object to be packaged even immediately after the bag making process, and a packaging bag using the heat-sealable paper can be obtained.

Brief Description of Drawing

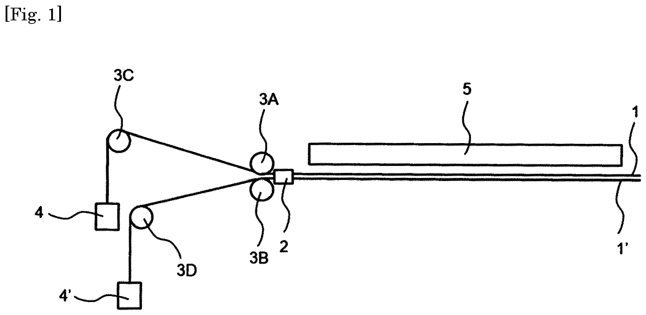

[Fig. 1] Fig. 1 is a schematic diagram of devices for measuring hot tack peeling distance.

Description of Embodiments

Hereinafter, the preferable embodiments of the present invention will be described. In this description, "X to Y" showing a range means a range of "X or more and Y or less". When numerical ranges are stated stepwise, the upper and lower limits of each numerical range can be combined arbitrarily. In this description, unless otherwise specified, operations and measurements of physical properties and the like are performed under the conditions of room temperature (20 to 25°C)/relative humidity of 40 to 50%RH. Further, the term "(meth)acrylic" collectively refers to acrylic and methacrylic.

<Heat-sealable paper>

The heat-sealable paper of this embodiment (which may be hereinafter referred to simply as "heat-sealable paper") is heat-sealable paper containing at least one heat-sealable layer on at least one surface of a paper substrate, wherein the heat-sealable layer contains a water-dispersible resin binder, when such two heat-sealable layers are heat-sealed to each other under the conditions of 150°C, 0.2 MPa, and one second, the hot tack peeling distance is 150 mm or less, the heat sealing peel strength is 2 N/15 mm or more, and the pulp recovery rate after re-disintegration is 85% or more. The heat-sealable paper of this embodiment is excellent in heat sealing property and recyclability and is capable of enclosing the object to be packaged even immediately after the bag making process.

Pulp can be recovered by re-disintegration at high yield, and the pulp can be reused by forming the heat-sealable layer using the water-dispersible resin binder, while expressing the heat sealing property. Further, when the hot tack peeling distance is 150 mm or less, even if a force to peel the layers is applied immediately after the two heat-sealable layers are attached to each other, the adhesion between the heat-sealable layers to each other is maintained. Therefore, it is considered that the risk of damage to the packaging bag caused by separation between the heat-sealable layers due to the impact of enclosing is suppressed even if the object to be packaged is enclosed immediately after the bag making process, and the object to be packaged can be enclosed even immediately after the bag making process. The effects of the present invention are not limited by the aforementioned mechanism.

[Paper substrate]

(Raw material pulp)

The pulp constituting the paper substrate is not particularly limited, and known pulps can be used. Specifically, examples thereof include unbleached pulps such as Leaf Unbleached Kraft Pulp (LUKP) and Needle Unbleached Kraft Pulp (NUKP); chemical pulps such as Leaf Bleached Kraft Pulp (LBKP) and Needle Bleached Kraft Pulp (NBKP); mechanical pulps such as Groundwood Pulp (GP), Pressurized Groundwood Pulp (PGW), Refiner Mechanical Pulp (RMP), ThermoMechanical Pulp (TMP), ChemiThermoMechanical Pulp (CTMP), ChemiMechanical Pulp (CMP), and ChemiGroundwood Pulp (CGP); waste paper pulps; non-wood fiber pulps such as kenaf, bagasse, bamboo, and cotton; and synthetic pulps. These pulps may be used individually by one type or in combination of two or more types. Among these, at least one selected from the group consisting of Leaf Unbleached Kraft Pulp (LUKP), Needle Unbleached Kraft Pulp (NUKP), Leaf Bleached Kraft Pulp (LBKP), and Needle Bleached Kraft Pulp (NBKP) is preferable.

The paper substrate used for the heat-sealable paper of the embodiment preferably contains raw material pulp containing softwood pulp as a main component. The "raw material pulp containing softwood pulp as a main component" refers to raw material pulp in which the content of softwood pulp is over 50 mass%, and the content of softwood pulp is preferably 80 mass% or more, more preferably 90 mass% or more, further preferably 100 mass%. The average fiber length of softwood pulp (needle pulp) is long, and paper substrates using softwood pulp as raw material pulp tend to have excellent impact resistance and excellent workability (hereinafter, also referred to as processability).

The softwood pulp is preferably pulp obtained from one or more selected from the group consisting of Douglas fir and pine tree, more preferably pulp obtained from Douglas fir, for obtaining heat-sealable paper having excellent impact resistance and excellent workability.

The raw material pulp constituting the paper substrate is preferably one or more selected from the group consisting of bleached kraft pulp and unbleached kraft pulp, more preferably unbleached kraft pulp.

(Kappa number)

The pulp constituting the paper substrate preferably has a kappa number as measured in accordance with JIS P 8211:2011 of 30 or more, and preferably 60 or less, more preferably 55 or less, further preferably 50 or less, further preferably 46 or less, for obtaining heat-sealable paper having impact resistance and workability. The kappa number of the pulp constituting the paper substrate is measured in accordance with JIS P 8211:2011, using a paper substrate pulp disintegrated in accordance with JIS P 8220-1:2012 as a sample.

(Tensile energy absorption)

In the paper substrate used for the heat-sealable paper of the embodiment, when the tensile energy absorption in the vertical direction as measured in accordance with JIS P 8113:2006 is defined as $X_1$, and the tensile energy absorption in the horizontal direction as measured in accordance with JIS P 8113:2006 is defined as $Y_1$, the following range is preferably satisfied.

The geometric mean of $X_1$ and $Y_1$ is preferably 50 J/m$^2$ or more, more preferably 100 J/m$^2$ or more, further preferably 150 J/m$^2$ or more, furthermore preferably 250 J/m$^2$ or more, in view of the impact resistance and processability. The upper limit of the geometric mean of $X_1$ and $Y_1$ is not specifically limited but is preferably 400 J/m$^2$ or less.

The geometric mean of $X_1$ and $Y_1$ of the paper substrate can be adjusted by adjusting the beating conditions and Clupak processing conditions.

Regarding the beating conditions, the geometric mean of $X_1$ and $Y_1$ of the paper substrate generally tends to increase, as the beating of pulp proceeds. The beating degree of the pulp is not particularly limited but is preferably 200 mL or more, more preferably 450 mL or more and preferably 800 mL or less, more preferably 700 mL or less, as Canadian standard freeness (CSF). The CSF is measured according to JIS P 8121-2: 2012 "Pulp-Freeness test method-Chapter 2: Canadian standard freeness method".

Regarding the Clupak processing conditions, the geometric mean of $X_1$ and $Y_1$ of the paper substrate can be controlled by the difference in papermaking speed before and after Clupak processing and the pressure of the nip roll, for example, in papermaking using a Clupak device.

The papermaking speed is not particularly limited but may be controlled to , for example, preferably 200 m/minute or more, more preferably 300 m/minute or more, further preferably 400 m/minute or more, and preferably 1000 m/minute or less, more preferably 800 m/minute or less, further preferably 700 m/minute or less. The nip pressure between the nip roll and the blanket during Clupak processing is also not particularly limited. For example, it may be appropriately controlled in the range of preferably 5 kN/m or more, more preferably 10 kN/m or more, and preferably 50 kN/m or less, more preferably 25 kN/m or less.

The difference in speed before and after Clupak processing is also not particularly limited and may be controlled so that a desired geometric mean of $X_1$ and $Y_1$ of the paper substrate is obtained, depending on the basis weight and the material of the pulp. The larger the difference in speed, the higher the geometric mean of $X_1$ and $Y_1$ of the paper substrate, but when the difference in speed is excessively large, problems in operation such as paper cutting occur, therefore, the difference in speed is preferably-45.0% or more, more preferably-40.0% or more, and is preferably-10.0% or less, more preferably-15.0% or less. A minus "-" here indicates that the speed after Clupak processing is slow.

The nip pressure by calendering is also not particularly limited and may be controlled so that a desired geometric mean of $X_1$ and $Y_1$ of the paper substrate is obtained, depending on the basis weight, the material of the pulp, the difference in speed before and after Clupak processing, and the like. It is preferably 100 kN/m or more, more preferably 130 kN/m or more, and is preferably 200 kN/m or less, more preferably 170 kN/m or less.

The ratio of $X_1$ to $Y_1$ ($X_1/Y_1$) of the paper substrate is preferably 0.5 or more, more preferably 1.0 or more, and is preferably 2.0 or less, more preferably 1.7 or less, in view of the impact resistance and processability.

The ratio $X_1/Y_1$ of the paper substrate can be adjusted by adjusting the jet wire ratio (pulp suspension jetting speed/wire speed). In general, as the jet wire ratio approximates 1, the ratio $X_1/Y_1$ of the paper substrate tends to decrease.

(Specific tensile energy absorption)

In the paper substrate used for the heat-sealable paper of this embodiment, when the specific tensile energy absorption in the vertical direction as measured in accordance with JIS P 8113: 2006 is defined as $X_2$, and the specific tensile energy absorption in the horizontal direction as measured in accordance with JIS P 8113: 2006 is defined as $Y_2$, the geometric mean of $X_2$ and $Y_2$ is preferably 0.8 J/g or more, more preferably 1.5 J/g or more, and further preferably 2.5 J/g or more, in view of the impact resistance and processability. The upper limit of the geometric mean of $X_2$ and $Y_2$ is not specifically limited but is preferably 5.0 J/g or less, more preferably 4.0 J/g or less.

The geometric mean of $X_2$ and $Y_2$ of the paper substrate can be adjusted by adjusting the beating conditions and Clupak processing conditions.

Regarding the beating conditions, the geometric mean of $X_2$ and $Y_2$ of the paper substrate generally tends to increase, as the beating of pulp proceeds. The beating degree of the pulp is not particularly limited but is preferably 200 mL or more, more preferably 450 mL or more and preferably 800 mL or less, more preferably 700 mL or less, as Canadian standard freeness (CSF). The CSF is measured according to JIS P 8121-2: 2012 "Pulp-Freeness test method-Chapter 2: Canadian standard freeness method".

Regarding the Clupak processing conditions, the geometric mean of $X_2$ and $Y_2$ of the paper substrate can be controlled by the difference in papermaking speed before and after Clupak processing and the pressure of the nip roll, for example, in papermaking using a Clupak device.

The papermaking speed is not particularly limited but, for example, is preferably 200 m/minute or more, more preferably 300 m/minute or more, further preferably 400 m/minute or more, and is preferably 1000 m/minute or less, more preferably 800 m/minute or less, further preferably 700 m/minute or less. The nip pressure between the nip roll and the blanket during Clupak processing is also not particularly limited. For example, it is preferably 5 kN/m or more, more preferably 10 kN/m or more, and is preferably 50 kN/m or less, more preferably 25 kN/m or less.

The difference in speed before and after Clupak processing is also not particularly limited and may be controlled so that a desired geometric mean of $X_2$ and $Y_2$ of the paper substrate is obtained, depending on the basis weight and the material of the pulp. The larger the difference in speed, the higher the geometric mean of $X_2$ and $Y_2$ of the paper substrate, but when the difference in speed is excessively large, problems in operation such as a paper break occur. Therefore, the difference in speed is preferably -45.0% or more, more preferably - 40.0% or more, and is preferably -10.0% or less, more preferably -15.0% or less. A minus "-" here indicates that the speed after Clupak processing is slow.

The nip pressure by calendering is also not particularly limited and may be controlled so that a desired geometric mean of $X_2$ and $Y_2$ of the paper substrate is obtained, depending on the basis weight, the material of the pulp, the difference in speed before and after Clupak processing, and the like. It is preferably 100 kN/m or more, more preferably 130 kN/m or more, and is preferably 200 kN/m or less, more preferably 170 kN/m or less.

(Basis weight)

The basis weight of the paper substrate is not specifically limited and is preferably 50 g/m$^2$ or more, more preferably 60 g/m$^2$ or more, further preferably 70 g/m$^2$ or more, and preferably 150 g/m$^2$ or less, more preferably 140 g/m$^2$ or less, further preferably 120 g/m$^2$ or less, for obtaining heat-sealable paper having impact resistance and workability. The basis weight of the paper substrate is measured in accordance with JIS P 8124:2011.

(Thickness)

The thickness of the paper substrate is preferably 20 $\mu$m or more, more preferably 30 $\mu$m or more, further preferably 40 $\mu$m or more, furthermore preferably 60 $\mu$m or more, still more preferably 80 $\mu$m or more, and preferably 200 $\mu$m or less, more preferably 180 $\mu$m or less, further preferably 160 $\mu$m or less, for obtaining heat-sealable paper having impact resistance and workability. The thickness of the paper substrate is measured in accordance with JIS P 8118:2014.

(Density)

The density of the paper substrate is preferably 0.3 g/cm$^3$ or more, more preferably 0.5 g/cm$^3$ or more, and preferably 1.2 g/cm$^3$ or less, more preferably 1.0 g/cm$^3$ or less, in view of formability. The density of the paper substrate is calculated from the basis weight and the thickness of the paper substrate obtained by the aforementioned measurement methods.

(Optional components)

The paper substrate may contain optional components including internal additives such as anionic, cationic, or amphoteric retention aids, drainage aids, dry paper strength additives, wet paper strength additives, sizing agents, and fillers, waterproofing agents, dyes, and fluorescent whitening agents, as required.

Examples of the dry paper strength additives include cationized starch, polyacrylamide, carboxymethylcellulose, and the like. The content of the dry paper strength additives is not specifically limited and is preferably 3.0 mass% or less per raw material pulp (absolute dry mass).

Examples of the wet paper strength additives include polyamide polyamine epichlorohydrin, urea formaldehyde resin, melamine formaldehyde resin, and the like.

Examples of the sizing agents include internal sizing agents such as rosin sizing agents, synthetic sizing agents, petroleum resin sizing agents, and the like, and surface sizing agents such as styrene/acrylic acid copolymers, styrene/methacrylic acid copolymers, and the like. The content of the sizing agents is not specifically limited and is preferably 3.0 mass% or less per raw material pulp (absolute dry mass).

Examples of fixing agents include aluminum sulfate, polyethyleneimine, and the like. The content of the fixing agents is not specifically limited and is preferably 3.0 mass% or less per raw material pulp (absolute dry mass).

Examples of the fillers include inorganic fillers such as talc, kaolin, calcined kaolin, calcium carbonate, calcium sulfate, barium sulfate, titanium dioxide, zinc oxide, alumina, magnesium carbonate, magnesium oxide, silica, white carbon, bentonite, zeolite, sericite, and smectite, and organic fillers such as acrylic resins and vinylidene chloride resins.

As the paper substrate, Clupak paper (extensible paper) or the like which has been subjected to Clupak processing for shrinking paper strip may be used, for example. The extensible paper has an elongation in the vertical direction or in the horizontal direction of 5% or more, and examples thereof include kraft paper type-5 Nos. 1 and 2 described in JIS P 3401:2000.

[Heat-sealable layer]

The heat-sealable paper according to this embodiment comprises at least one heat-sealable layer on at least one surface of the paper substrate. The heat-sealable layer is a layer that is melted and adheres by heating, ultrasonic waves, or the like.

(Water-dispersible resin binder)

The heat-sealable layer contains a water-dispersible resin binder. The water-dispersible resin binder is a resin binder that is not water-soluble (specifically, the solubility in water at 25°C is 10 g/L or less) but is finely dispersed in water like an emulsion or a suspension. Aqueous application of the heat-sealable layer using a water-dispersible resin binder enables heat-sealable paper that is excellent in re-disintegration property and can be recycled as paper to be obtained. In the case where the water-dispersible resin binder also corresponds to the following lubricant, it is classified as a lubricant.

The water-dispersible resin binder is not specifically limited, as long as it exerts the effects of the present invention, but examples thereof include polyolefin resins (such as polyethylene and polypropylene), vinyl chloride resins, styrene resins, styrene/butadiene copolymers, styrene/unsaturated carboxylic acid copolymers (such as styrene/(meth)acrylic acid copolymer), acrylic resins, acrylonitrile/styrene copolymers, acrylonitrile/butadiene copolymers, ABS resins, AAS resins, AES resins, vinylidene chloride resins, polyurethane resins, poly-4-methyl pentene-1 resins, polybutene-1 resins, vinylidene fluoride resins, vinyl fluoride resins, fluorine resins, polycarbonate resins, polyamide resins, acetal resins, polyphenylene oxide resins, polyester resins (such as polyethylene terephthalate and polybutylene terephthalate), polyphenylene sulfide resins, polyimide resins, polysulfone resins, polyether sulfone resins, polyarylate resins, olefin/unsaturated carboxylic acid copolymers, and modified products thereof. These may be used individually by one type or may be used in combination of two types or more. Among these, at least one selected from the group consisting of a styrene/butadiene copolymer and an olefin/unsaturated carboxylic acid copolymer is preferable. Further, an olefin/unsaturated carboxylic acid copolymer is more preferable for further decreasing the hot tack peeling distance, and a styrene/butadiene copolymer is more preferable for further improving the recyclability.

Examples of the olefin/unsaturated carboxylic acid copolymer include an ethylene-(meth)acrylic acid copolymer and an ethylene-(meth)acrylic acid alkyl ester copolymer. Among them, an ethylene-(meth)acrylic acid copolymer is preferable, and an ethylene-acrylic acid copolymer is more preferable. Therefore, the water-dispersible resin binder contained in the heat-sealable layer is at least one selected from the group consisting of a styrene/butadiene copolymer and an ethylene-(meth)acrylic acid copolymer. Further, an ethylene-(meth)acrylic acid copolymer is more preferable. The hot tack peeling distance is reduced more by using an ethylene-(meth)acrylic acid copolymer, and it is more advantageous in enclosing the object to be packaged immediately after the bag making process. In addition, contamination of the device during application is reduced, and the runnability is improved. The olefin/unsaturated carboxylic acid copolymer may be an ionomer.

The styrene/butadiene copolymer may be any of synthetic product and commercially available product, and examples of the commercially available products include Nipol latex LX407G51, LX407S10, LX407S12, LX410, LX415M, LX416, LX430, LX433C, 2507H, available from Zeon Corporation, Nalstar SR-101, SR-102, SR-103, SR-115, and SR-153, available from NIPPON A&L INC., and styrene butadiene latex 0602 and 0597C, available from JSR Corporation.

The ethylene-(meth)acrylic acid copolymer to be used may be any of synthetic products and commercially available products, and examples of the commercially available products include MP498345N, MP4983R, MP4990R, and MFHS1279, available from Michelman Japan LLC, ZAIKTHENE (registered trademark) A and ZAIKTHENE (registered trademark) AC, available from Sumitomo Seika Chemicals Company, Limited, and CHEMIPEARL S Series, available from Mitsui Chemicals, Inc.

The glass transition temperature of the water-dispersible resin binder is preferably 5°C or more, more preferably 10°C or more, further preferably 15°C or more, furthermore preferably 30°C or more, still further preferably 40°C or more. Use of the water-dispersible resin binder with a glass transition temperature of the lower limit or more reduces the hot tack peeling distance and allows heat-sealable paper capable of enclosing the object to be packaged even immediately after the bag making process to be obtained. Further, use of the water-dispersible resin binder with a glass transition temperature of the lower limit or more can suppress blocking, as well. Meanwhile, the glass transition temperature of the water-dispersible resin binder is preferably 100°C or less, more preferably 80°C or less, further preferably 55°C or less, in view of the heat sealing property. As the glass transition temperature of the water-dispersible resin binder, a value measured with a differential scanning calorimeter is employed.

The content of the water-dispersible resin binder in the heat-sealable layer is preferably 30 mass% or more, more preferably 35 mass% or more, further preferably 40 mass% or more, furthermore preferably 45 mass% or more, still further preferably 50 mass% or more, and is 100 mass% or less, preferably 99 mass% or less, more preferably 98 mass% or less. Within such a range, heat-sealable paper with high heat sealing strength can be obtained.

That is, according to one embodiment of the present invention, the content of the styrene/butadiene copolymer and ethylene-(meth)acrylic acid copolymer in the heat-sealable layer is preferably 30 mass% or more, more preferably 35 mass% or more, further preferably 40 mass% or more, furthermore preferably 45 mass% or more, still further preferably 50 mass% or more, and is 100 mass% or less, preferably 99 mass% or less, more preferably 98 mass% or less.

(Lubricant)

For imparting a slip property to the heat-sealable paper and suppressing blocking, the heat-sealable layer preferably contains a lubricant in addition to the water-dispersible resin binder. The lubricant is a substance that can reduce the coefficient of friction on the surface of the heat-sealable layer by being mixed in the heat-sealable layer.

The lubricant is not specifically limited, and waxes, metal soaps, fatty acid esters, and the like can be used, for example. One of the lubricants may be used alone, two or more of them may be used in combination. Examples of the waxes include natural waxes including animal or plant-derived waxes (such as beeswax and carnauba wax), mineral waxes (such as microcrystalline wax), and petroleum wax; and synthetic waxes including polyolefin wax, paraffin wax, polyester wax, and the like. Examples of the metal soaps include calcium stearate, sodium stearate, zinc stearate, aluminum stearate, magnesium stearate, fatty acid sodium soap, potassium oleate soap, castor oil potassium soap, composites thereof, and the like. Among the lubricants, carnauba wax and paraffin wax are preferable since the melting point is comparatively low, and wax components are easily formed on the surface of the coating layer, and the effect of suppressing blocking is excellent. That is, the lubricant is preferably at least one selected from the group consisting of carnauba wax and paraffin wax. The carnauba wax to be used may be any of synthetic products and commercially available products, and examples of the commercially available products include Selosol 524 and the like, available from Chukyo Yushi Co., Ltd. The paraffin wax to be used may be any of synthetic products and commercially available products, and examples of the commercially available products include Hidorin L-700 and the like, available from Chukyo Yushi Co., Ltd.

In the case where the heat-sealable layer contains a lubricant, the content of the lubricant is preferably 0.2 parts by mass or more, more preferably 0.5 parts by mass or more, further preferably 1 part by mass or more, and is preferably 50 parts by mass or less, more preferably 40 parts by mass or less, further preferably 35 parts by mass or less, with respect to 100 parts by mass of the water-dispersible resin binder.

In the case where the heat-sealable layer contains a lubricant, the content of the lubricant in the heat-sealable layer is preferably 0.1 mass% or more, more preferably 0.2 mass% or more, further preferably 0.5 mass% or more, and is preferably 40 mass% or less, more preferably 30 mass% or less, further preferably 25 mass% or less.

In this embodiment, the heat-sealable layer contains the water-dispersible resin binder and preferably contains a lubricant in addition to the water-dispersible resin binder. Further, it may contain a pigment in addition to the water-dispersible resin binder and the lubricant.

(Pigment)

In this embodiment, the heat-sealable layer may contain a pigment in addition to the water-dispersible resin binder. The problem of the heat-sealable layer-coated surface sticking to the back surface of the heat-sealable paper to cause peeling (blocking) is suppressed when producing the heat-sealable paper by containing a pigment, so that the heat-sealable paper having excellent blocking resistance is obtained. Moreover, recyclability is also improved by adding an appropriate amount of pigment.

The pigment is not specifically limited, and examples thereof include various pigments conventionally used for pigment coating layers. The pigment may be used alone by one type or may be used in combination of two or more types. A pigment with an aspect ratio of 20 or more is preferable in view of the heat sealing peel strength and blocking resistance. The aspect ratio of the pigment is more preferably 25 or more, further preferably 30 or more, particularly preferably 60 or more, and is preferably 10,000 or less, more preferably 1,000 or less, further preferably 300 or less, in view of the availability and smoothness of the heat-sealable layer surface. The aspect ratio of the pigment means major axis/minor axis and may be measured by the following method.

The pigment is preferably a layered inorganic compound with an aspect ratio of 20 or more. The form of the layered inorganic compound is tabular. When the pigment is tabular, the protrusion of the pigment from the surface of the heat-sealable layer is suppressed, and a heat-sealable layer having excellent blocking resistance is obtained, while maintaining the heat sealing property.

The pigment preferably has a length (average particle size) of 0.1 $\mu$m or more and 100 $\mu$m or less. When the length is 0.1 $\mu$m or more, the pigment is easily arranged in parallel to the paper substrate. Further, when the length is 100 $\mu$m or less, there is little concern that a part of the pigment protrudes from the heat-sealable layer. The length of the pigment is more preferably 0.3 $\mu$m or more, further preferably 0.5 $\mu$m or more, particularly preferably 1.0 $\mu$m or more, and is more preferably 30 $\mu$m or less, further preferably 20 $\mu$m or less, particularly preferably 15 $\mu$m or less.

Here, the length of the pigment when contained in the heat-sealable layer is determined, as follows. An enlarged image of the cross section of the heat-sealable layer is captured with an electron microscope. At this time, the magnification is such that about 20 to 30 pigments are included in the screen. The length of each pigment in the screen is measured. Then, the average of the lengths obtained is calculated as the length of the pigment. The length of the pigment may be expressed in terms of particle size.

The pigment preferably has a thickness of 200 nm or less. The thickness of the pigment is more preferably 100 nm or less, further preferably 80 nm or less, even more preferably 50 nm or less, particularly preferably 30 nm or less. Further, it is preferably 5 nm or more, more preferably 10 nm or more. The smaller the average thickness of the pigment, the higher the heat sealing peel strength is obtained. Here, the thickness of the pigment when contained in the heat-sealable layer is determined, as follows. An enlarged image of the cross section of the heat-sealable layer is captured with an electron microscope. At this time, the magnification is such that about 20 to 30 pigments are included in the screen. The thickness of each pigment in the screen is measured. Then, the average of the thicknesses obtained is calculated as the thickness of the pigment.

Specific examples of the pigment include mica, bentonite, kaolin, pyrophyllite, talc, smectite, vermiculite, chlorite, septe chlorite, serpentine, stilpnomelane, montmorillonite, heavy calcium carbonate (ground calcium carbonate), light calcium carbonate (synthetic calcium carbonate), composite synthetic pigment of calcium carbonate and other hydrophilic organic compounds, satin white, lithopone, titanium dioxide, silica, barium sulfate, calcium sulfate, alumina, aluminum hydroxide, zinc oxide, magnesium carbonate, silicate, colloidal silica, plastic pigments of hollow or solid organic pigments, binder pigments, plastic beads, microcapsules, and the like.

Specific examples of mica include synthetic mica (such as swelling synthetic mica), white mica (muscovite), silk mica (sericite), phlogopite (phlogopite), black mica (biotite), fluorine phlogopite (artificial mica), red mica, soda mica, vanadium mica, illite, tin mica, paragonite, and brittle mica. Further, specific examples of bentonite include montmorillonite.

Specific examples of kaolin include various kaolins such as kaolin, calcined kaolin, structured kaolin, and delaminated kaolin.

Among these, pigments with an aspect ratio of 20 or more are particularly preferable in view of the heat sealing peel strength, blocking resistance, and economy, any one or more of mica, bentonite, kaolin, and talc is more preferably contained, and kaolin is further preferably contained.

In the case where the heat-sealable layer contains a pigment, the content of the pigment is preferably 10 parts by mass or more, more preferably 20 parts by mass or more, further preferably 30 parts by mass or more, furthermore preferably 40 parts by mass or more, with respect to 100 parts by mass of the water-dispersible resin binder, in view of the blocking resistance and recyclability. Meanwhile, in view of the heat sealing property and hot tack peeling distance, it is preferably 200 parts by mass or less, more preferably 150 parts by mass or less, further preferably 120 parts by mass or less.

In the case where the heat-sealable layer contains a pigment, the content of the pigment in the heat-sealable layer is preferably 5 mass% or more, more preferably 10 mass% or more, further preferably 20 mass% or more, furthermore preferably 25 mass% or more, in view of the blocking resistance and recyclability, and is preferably 70 parts by mass or less, more preferably 60 mass% or less, further preferably 50 mass% or less, in view of the heat sealing property and hot tack peeling distance.

(Other components)

The heat-sealable layer may contain other components in addition to the water-dispersible resin binder, the pigment, and the lubricant. Examples of the other components include silane coupling agents; defoaming agents; viscosity modifiers; leveling agents such as surfactants and alcohols; colorants such as coloring dyes.

<Physical properties of heat-sealable paper>

(Pulp recovery rate after re-disintegration)

The heat-sealable paper of the embodiment has a pulp recovery rate after re-disintegration of 85% or more, more preferably 90% or more, further preferably 95% or more, furthermore preferably 98% or more. The pulp recovery rate after re-disintegration falling within such a range allows excellent recyclability. The pulp recovery rate after re-disintegration of the heat-sealable paper is a value measured by the method according to Examples, which will be described below.

(Peel strength)

In the heat-sealable paper of the embodiment, the peel strength of the heat-sealable layer is 2 N/15 mm or more, preferably 4 N/15 mm or more, more preferably 6 N/15 mm or more, and preferably 10 N/15 mm or less, more preferably 9.5 N/ mm or less, further preferably 9.0 N/15 mm or less, furthermore preferably 8.5 N/15 mm or less, still more preferably 8.0 N/15 mm or less. The peel strength of the heat-sealable layer is a peel strength when two heat-sealable layers are heat-sealed under the conditions of 150°C, 0.2 MPa, and 1 second, specifically, is a value measured by the method according to Examples, which will be described below.

The peel strength can be adjusted by selecting the glass transition temperature and type of the water-dispersible resin binder. For example, the resins melt and heat-sealable layers adhere well to each other under predetermined heat sealing conditions by setting the glass transition temperature of the water-dispersible resin binder to 100°C or less, so that a desired peel strength can be ensured.

(Hot tack peeling distance)

The hot tack peeling distance of the heat-sealable paper of this embodiment is 150 mm or less, and a smaller distance is preferable (lower limit: 0 mm or more). When the hot tack peeling distance is 150 mm or less, heat-sealable paper capable of enclosing the object to be packaged even immediately after the bag making process is obtained. Further, the lower limit is not specifically limited but is preferably 1 mm or more, more preferably 3 mm or more, in view of production. The hot tack peeling distance is a peeling distance immediately after (within one second) two heat-sealable layers are heat-sealed to each other under the conditions of 150°C, 0.2 MPa, and one second, specifically, a value measured by the method described in Examples, which will be described below.

The hot tack peeling distance can be adjusted by selecting the glass transition temperature and type of the water-dispersible resin binder. For example, since the resin quickly solidifies immediately after it is released from the heating during heat sealing, and the adhesion between the heat-sealable layers is maintained by setting the glass transition temperature of the water-dispersible resin binder to 5°C or more, so that the hot tack peeling distance can be suppressed to be small.

(Tensile energy absorption)

When the tensile energy absorption in the vertical direction of the heat-sealable paper of this embodiment as measured in accordance with JIS P 8113:2006 is defined as $X_1$, and the tensile energy absorption in the horizontal direction as measured in accordance with JIS P 8113:2006 is defined as $Y_1$, the following range is preferably satisfied.

The geometric mean of $X_1$ and $Y_1$ of the heat-sealable paper is preferably 50 $J/m^2$ or more, more preferably 100 $J/m^2$ or more, further preferably 200 $J/m^2$ or more, furthermore preferably 300 $J/m^2$ or more, in view of the impact resistance and processability. The upper limit of the geometric mean of $X_1$ and $Y_1$ is not specifically limited but is preferably 400 $J/m^2$ or less.

The geometric mean of $X_1$ and $Y_1$ of the heat-sealable paper can be adjusted to a desired range by adjusting the geometric mean of $X_1$ and $Y_1$ of the paper substrate to be used. The method for adjusting the geometric mean of $X_1$ and $Y_1$ of the paper substrate is as described above.

The ratio of $X_1$ to $Y_1$ of the heat-sealable paper ($X_1/Y_1$) is preferably 0.5 or more, more preferably 0.7 or more, and is preferably 2.0 or less, more preferably 1.8 or less, further preferably 1.5 or less, in view of the impact resistance and processability.

The ratio $X_1/Y_1$ of the heat-sealable paper can be adjusted to a desired range by adjusting the ratio $X_1/Y_1$ of the paper substrate to be used. The method for adjusting the ratio $X_1/Y_1$ of the paper substrate is as described above.

(Specific tensile energy absorption)

When the specific tensile energy absorption in the vertical direction of the heat-sealable paper of this embodiment as measured in accordance with JIS P 8113:2006 is defined as $X_2$, and the specific tensile energy absorption in the horizontal direction as measured in accordance with JIS P 8113:2006 is defined as $Y_2$, the geometric mean of $X_2$ and $Y_2$ is preferably 0.8 J/g or more, further preferably 1.5 J/g or more, furthermore preferably 2.5 J/g or more, in view of the impact resistance and processability. The upper limit of the geometric mean of $X_2$ and $Y_2$ is not specifically limited but is preferably 5.0 J/g or less, more preferably 4.0 J/g or less.

The geometric mean of $X_2$ and $Y_2$ of the heat-sealable paper can be adjusted to a desired range by adjusting the geometric mean of $X_2$ and $Y_2$ of the paper substrate to be used. The method for adjusting the geometric mean of $X_2$ and $Y_2$ of the paper substrate is as described above.

(Surface smoothness)

The Oken smoothness of a surface of the heat-sealable layer of the heat-sealable paper of this embodiment is preferably 2 seconds or more, more preferably 10 seconds or more, further preferably 12 seconds or more, for improving the heat sealing peel strength, and the upper limit is not specifically limited but is preferably 500 seconds or less, more preferably 400 seconds or less.

Further, the Oken smoothness of the surface opposite to the heat-sealable layer (the other surface of the paper base, for example, in the case where the heat-sealable layer is provided only on one surface of the paper substrate, and the paper substrate is exposed on the other surface) is preferably 30 seconds or more, more preferably 50 seconds or more, further preferably 60 seconds or more, for improving the printability, and the upper limit is not specifically limited but is preferably 10000 seconds or less, more preferably 5000 seconds or less.

The Oken smoothness is measured in accordance with JIS P8155:2010.

The Oken smoothness of each of the surface of the heat-sealable layer and the opposite surface of the heat-sealable paper can be adjusted to the aforementioned range by super calendering or the like, which will be described below.

[Production method of heat-sealable paper]

The production method of the heat-sealable paper of the embodiment is not specifically limited. Examples thereof include a production method comprising an application step of applying at least one heat-sealable layer on at least one surface of a paper substrate obtained by a method that comprises a cooking step of adjusting the kappa number of raw material pulp to 30 or more and 60 or less by cooking, a beating step of beating a dispersion containing 20 mass% or more and 45 mass% or less of the raw material pulp subjected to cooking, and a papermaking step of making paper from the raw material pulp subjected to beating. Each step of the production method will be described below.

(Cooking step)

The cooking step is a step of conducting cooking to adjust the kappa number of the raw material pulp to preferably 30 or more and 60 or less. Although not specifically limited, raw material chips used as a material of the raw material pulp are treated with a chemical solution containing sodium hydroxide, thereby allowing raw material pulp having a kappa number of 30 or more and 60 or less to be obtained. As the method for treatment with a chemical solution containing sodium hydroxide, a known treatment method using a known chemical solution can be used.

Adjusting the kappa number of the raw material pulp to 30 or more and 60 or less allows a paper substrate with impact resistance and workability and heat-sealable paper using the paper substrate to be obtained. From this point of view, the kappa number of raw material pulp is preferably 50 or less, more preferably 45 or less.

The raw material chips used as a material of the raw material pulp preferably contains softwood pulp as a main component. The "raw material chips containing softwood pulp as a main component" has a content of the softwood of over 50 mass%, preferably a content of the softwood of 80 mass% or more, more preferably 90 mass% or more, further preferably 100 mass%, in the raw material chips.

The raw material pulp may not be bleached or may be bleached. The raw material pulp is preferably one or more selected from the group consisting of bleached kraft pulp and unbleached kraft pulp, more preferably unbleached kraft pulp.

(Beating step)

The beating step is a step of beating a dispersion preferably containing 20 mass% or more and 45 mass% or less of the raw material pulp subjected to cooking. The beating method is not specifically limited and preferably includes: dispersing, in water, the raw material pulp subjected to cooking, producing a dispersion having the above raw material pulp concentration, and subjecting the dispersion to beating. The beating method is not specifically limited and can be performed, for example, using a beater such as a double disk refiner, a single disk refiner, and a conical refiner.

Beating the dispersion containing 20 mass% or more and 45 mass% or less of the raw material pulp subjected to cooking allows a paper substrate with impact resistance and workability and heat-sealable paper using the paper substrate to be obtained, as well as allowing excellent productivity.

(Papermaking step)

The papermaking step is a step of making paper from the raw material pulp subjected to beating. The papermaking method is not specifically limited, and examples thereof include the acidic papermaking method in which papermaking is performed at a pH of around 4.5, the neutral papermaking method in which papermaking is performed at a pH of about 6 to about 9, and the like. In the papermaking step, agents for papermaking step such as pH adjusters, defoamers, pitch control agents, and slime control agents can be appropriately added, as required. The paper machine is also not specifically limited, and examples thereof include Fourdrinier, cylindrical, and inclined continuous paper machines or multilayer paper machines that combine these.

The paper substrate used for the heat-sealable paper of the embodiment can be obtained by a method including the cooking step, the beating step, and the papermaking step. After the papermaking step, a Clupak step of shrinking the paper strip using Clupak equipment may be provided, as required. A known Clupak equipment can be used. The production method of the paper substrate used for the heat-sealable paper of the embodiment is not limited to the aforementioned method.

Further, the production method of the heat-sealable paper in the embodiment may include a surface treatment step of treating the surface of the paper substrate with an agent. Examples of the agent used for the surface treatment step include sizing agents, waterproofing agents, water retention agents, thickeners, lubricants, and the like. A known device can be used for the surface treatment step.

The production method of the heat-sealable paper of the embodiment comprises an application step of applying the heat-sealable layer on at least one surface of the paper substrate obtained as described above. The heat-sealable layer coating liquid (heat-sealable layer coating material) may be applied twice or more.

In the case of forming multiple heat-sealable layers on the paper substrate, the aforementioned method of sequentially forming the heat-sealable layers is preferable, but there is no limitation to this, and a simultaneous multilayer coating method may be employed. The simultaneous multilayer coating method is a method of discharging multiple types of coating liquids separately from slit-shaped nozzles to form a liquid laminate and applying the laminate to the paper substrate to form multiple heat-sealable layers simultaneously.

The application equipment for applying the heat-sealable layer coating liquid to the paper substrate is not specifically limited, and known equipment may be used. Examples of the application equipment include blade coaters, bar coaters, air knife coaters, slit die coaters, gravure coaters, micro gravure coaters, roll coaters, size presses, gate roll coaters, Sym-sizers, and the like.

The drying equipment for drying the heat-sealable layer is not specifically limited, and known equipment can be used. Examples of the drying equipment include hot air dryers, infrared dryers, gas burners, hot plates, and the like. Further, the drying temperature may be appropriately set in consideration of the drying time.

The solvent for the heat-sealable layer coating liquid is not specifically limited, and water or an organic solvent such as ethanol, isopropyl alcohol, methyl ethyl ketone, and toluene can be used. Among these, water is preferable as a dispersion medium for the heat-sealable layer coating liquid, since there is no problem of volatile organic solvents. That is, the heat-sealable layer coating liquid is preferably an aqueous composition for heat-sealable layers.

The solid content (solid content concentration) of the heat-sealable layer coating liquid is not specifically limited and may be appropriately selected in view of the coating property and ease of drying but is preferably 3 mass% or more, more preferably 5 mass% or more, further preferably 10 mass% or more, and preferably 80 mass% or less, more preferably 70 mass% or less, further preferably 60 mass% or less.

The coating amount of the heat-sealable layer (after drying) is preferably 1 $g/m^2$ or more, more preferably 2 $g/m^2$ or more, more preferably 3 $g/m^2$ or more, and is preferably 50 $g/m^2$ or less, more preferably 30 $g/m^2$ or less, further preferably 20 $g/m^2$ or less, furthermore preferably 15 $g/m^2$ or less. The heat-sealable layer may be one layer or may be two or more layers. When the number of the heat-sealable layer is two or more, the aforementioned coating amount is the total coating amount.

After the heat-sealable layer is applied and dried, super calendering is preferably performed. Here, the super calendering is provided independently from the papermaking and is generally to pass the paper to be processed between metal rolls or between a metal roll and an elastic roll, heat it, apply a pressure thereto, and the like. Super calendering may be performed in one stage or in multiple stages, and there is no specific limitation.

Super calendering is preferable because it improves the smoothness of the surface of the heat-sealable layer, resulting in an improvement in heat sealing peel strength and a reduction in hot tack peeling distance.

Further, it is preferable since the smoothness of the surface opposite to the heat-sealable layer (the other surface of the paper substrate, for example, in the case where the heat-sealable layer is provided only on one surface of the paper substrate, and the paper substrate is exposed on the other surface) is improved, as a result of which the printability is improved.

Further, since the density of the heat-sealable paper tends to increase by super calendering, and the surface smoothness is improved, as described above, super calendering is preferable because sticking to the roll of a packing machine and sticking of heat-sealable papers to each other are suppressed when delivering and heat-sealing the heat-sealable paper in the packing machine during bag making, thereby improving processability.

The linear pressure in super calendering is preferably 10 kg/cm or more, more preferably 30 kg/cm or more, further preferably 50 kg/cm or more, and is preferably 1000 kg/cm or less, more preferably 500 kg/cm or less, further preferably 200 kg/cm or less. However, the linear pressure may be appropriately changed according to the desired smoothness and density.

Further, in the case where heating is performed in super calendering, the heating temperature is not specifically limited but is preferably 20°C or more, more preferably 30°C or more, further preferably 35°C or more, and is preferably 80°C or less, more preferably 70°C or less, further preferably 60°C or less, for preventing deterioration of the paper substrate and the heat-sealable layer due to heat and sticking of the heat-sealable layer while enhancing the effect of treatment.

<Applications>

The heat-sealable paper according to this embodiment can be favorably used as a packaging bag for foods, household goods, commodities (soaps and diapers), and the like. Accordingly, this invention also provides a packaging bag using the heat-sealable paper.

Examples

Hereinafter, examples will be mentioned in order to specifically describe this invention, but this invention is not limited to these examples. Unless otherwise specified, the following operations were performed under the conditions of 23°C and a relative humidity of 50%RH. In the following examples and comparative examples, "parts" and "%" respectively refer to "parts by mass" and "mass%", unless otherwise specified.

[Example 1]

<Preparation of heat-sealable layer coating material>

98 parts of an aqueous dispersion of a styrene/butadiene copolymer (Nipol latex LX407S12, available from Zeon Corporation, solid content 46%, glass transition temperature: 18°C (catalog value)) (in terms of solid content) and 2 parts of a paraffin wax emulsion (Hidorin L-700, available from Chukyo Yushi Co., Ltd., solid content 30%) (in terms of solid content) were mixed, and water was added thereto to a solid content concentration of 33%, followed by stirring, to prepare a heat-sealable layer coating material (concentration 33%). The styrene/butadiene copolymer had a solubility in water at 25°C of 10 g/L or less.

<Production of heat-sealable paper>

The heat-sealable layer coating material obtained was applied to the W-surface of an extensible paper cement with a basis weight of 88 $g/m^2$, a thickness of 135 $\mu$m, and a density of 0.6 $g/cm^3$ (available from Oji Materia Co., Ltd., F-surface smoothness: 4 seconds, W-surface smoothness: 8 seconds, the geometric mean of $X_1$ and $Y_1$: 178 $J/m^2$, the

ratio of $X_1$ to $Y_1$ ($X_1/Y_1$): 1.5, the geometric mean of $X_2$ and $Y_2$: 2.1 J/g, the pulp type: Needle (Douglas fir) Unbleached Kraft Pulp 100 parts by mass, kappa number of raw material pulp: 45, paper strengthening agent: (polyacrylamide: 0.8 parts by mass and cationized starch: 0.8 parts by mass (1.6 parts by mass in total)), sizing agent: (synthetic sizing agent: 0.2 parts by mass), and aluminum sulfate: 1.0 part by mass) so that the coating amount of the heat-sealable layer after drying was 12 g/m$^2$ to form a heat-sealable layer with an air knife coater, followed by drying with a dryer at 130 to 160°C, so as to obtain heat-sealable paper.

In the paper substrate, $X_1$ represents a tensile energy absorption in the vertical direction as measured in accordance with JIS P 8113:2006, $Y_1$ represents a tensile energy absorption in the horizontal direction as measured in accordance with JIS P 8113:2006, $X_2$ represents a specific tensile energy absorption in the vertical direction as measured in accordance with JIS P 8113:2006, and $Y_2$ represents a specific tensile energy absorption in the horizontal direction as measured in accordance with JIS P 8113:2006. The same applies the following examples and comparative examples.

[Example 2]

<Preparation of heat-sealable layer coating material>

98 parts of an aqueous dispersion of a styrene/butadiene copolymer (Nalstar SR-102, available from NIPPON A&L INC., solid content 46%) (in terms of solid content) and 2 parts of a paraffin wax emulsion (Hidorin L-700, available from Chukyo Yushi Co., Ltd., solid content 30%) (in terms of solid content) were mixed, and water was added to the resultant mixture to make a solid content concentration be 33%, followed by stirring, to obtain a heat-sealable layer coating material (concentration 33%). The styrene/butadiene copolymer had a solubility in water at 25°C of 10 g/L or less.

<Production of heat-sealable paper>

Heat-sealable paper was obtained in the same manner as in Example 1 except that the aforementioned heat-sealable layer coating material was used.

[Example 3]

<Preparation of heat-sealable layer coating material>

98 parts of an aqueous dispersion of a commercially available ethylene-acrylic acid copolymer A (in terms of solid content) and 2 parts of an aqueous dispersion of a commercially available carnauba wax (in terms of solid content) were mixed, and water was added to the resultant mixture to make a solid content concentration be 35%, followed by stirring, to prepare a heat-sealable layer coating material (concentration 35%). The ethylene-acrylic acid copolymer A had a solubility in water at 25°C of 10 g/L or less.

<Production of heat-sealable paper>

Using the heat-sealable layer coating material, heat-sealable paper was obtained in the same manner as in Example 1 except that the coating amount amount of the heat-sealable layer after drying was changed to 8 g/m$^2$.

[Example 4]

Heat-sealable paper was obtained in the same manner as in Example 3 except that 97 parts of an aqueous dispersion of the ethylene-acrylic acid copolymer A (in terms of solid content) and 3 parts of an aqueous dispersion of a commercially available carnauba wax (in terms of solid content) were mixed, and water was added to the resultant mixture to make to a solid content concentration be 35%, followed by stirring, to prepare a heat-sealable layer coating material (concentration 35%).

[Example 5]

Heat-sealable paper was obtained in the same manner as in Example 3 except that 86 parts of an aqueous dispersion of the ethylene-acrylic acid copolymer A (in terms of solid content) and 14 parts of an aqueous dispersion of a commercially available carnauba wax (in terms of solid content) were mixed, and water was added to the resultant mixture to make a solid content concentration be 35%, followed by stirring, to prepare a heat-sealable layer coating material (concentration 35%).

[Example 6]

Heat-sealable paper was obtained in the same manner as in Example 3 except that 75 parts of an aqueous dispersion of the ethylene-acrylic acid copolymer A (in terms of solid content) and 25 parts of an aqueous dispersion of a commercially available carnauba wax (in terms of solid content) were mixed, and water was added to the resultant mixture to make a solid content concentration be 35%, followed by stirring, to prepare a heat-sealable layer coating material (concentration 35%).

[Example 7]

<Preparation of heat-sealable layer coating material>

A heat-sealable layer coating material was prepared in the same manner as in Example 3.

<Production of heat-sealable paper>

The heat-sealable layer coating material obtained was applied to the W-surface of super extensible paper with a basis weight of 100 g/m$^2$, a thickness of 125 $\mu$m, and a density of 0.8 g/cm$^3$ (available from Oji Materia Co., Ltd., F-surface smoothness: 8 seconds, W-surface smoothness: 15 seconds, the geometric mean of $X_1$ and $Y_1$: 320 J/m$^2$, the ratio of $X_1$ to $Y_1$ ($X_1/Y_1$): 1.2, the geometric mean of $X_2$ and $Y_2$: 3.2 J/g, the pulp type: Needle (Douglas fir) Unbleached Kraft Pulp 100 mass%, kappa number of raw material pulp: 45, paper strengthening agent (polyacrylamide: 0.8 mass% and cationized starch: 0.8 mass% (1.6 mass% in total)), sizing agent (synthetic sizing agent: 0.2 mass%), and aluminum sulfate: 1.0 mass%) so that the coating amount of the heat-sealable layer after drying was 8 g/m$^2$, to form a heat-sealable layer with an air knife coater so as to obtain heat-sealable paper.

[Example 8]

Heat-sealable paper was obtained in the same manner as in Example 7 except that the heat-sealable layer coating material prepared in Example 4 was used instead of the heat-sealable layer coating material prepared in Example 3.

[Example 9]

Heat-sealable paper was obtained in the same manner as in Example 7 except that the heat-sealable layer coating material prepared in Example 5 was used instead of the heat-sealable layer coating material prepared in Example 3.

[Example 10]

Heat-sealable paper was obtained in the same manner as in Example 7 except that the heat-sealable layer coating material prepared in Example 6 was used instead of the heat-sealable layer coating material prepared in Example 3.

[Example 11]

<Preparation of heat-sealable layer coating material>

69 parts of an aqueous dispersion of the ethylene-acrylic acid copolymer A (in terms of solid content), 1 part of an aqueous dispersion of a commercially available carnauba wax (in terms of solid content), and 30 parts of an aqueous dispersion of kaolin (aspect ratio: 80 to 100 and average particle size: 8 $\mu$m) (solid content concentration 50%) (in terms of solid content) were mixed, and water was added to the resultant mixture to make a solid content concentration be 25%, followed by stirring, to prepare a heat-sealable layer coating material (concentration 25%).

<Production of heat-sealable paper>

The heat-sealable layer coating material obtained was applied to a rough surface (the opposite side of the gloss surface) of one-sided glossy paper with a basis weight of 70 g/m$^2$, a thickness of 90 $\mu$m, and a density of 0.8 g/cm$^3$ (OK Blizzard (registered trademark), available from Oji Materia Co., Ltd., the geometric mean of $X_1$ and $Y_1$: 71

$J/m^2$, the ratio of $X_1$ to $Y_1$ ($X_1/Y_1$): 0.7, and the geometric mean of $X_2$ and $Y_2$: 1.0 J/g) so that the coating amount of the heat-sealable layer after drying was 4 $g/m^2$, to form a heat-sealable layer with an air knife coater.

[Example 12]

Heat-sealable paper was obtained in the same manner as in Example 11 except that 68 parts of an aqueous dispersion of the ethylene-acrylic acid copolymer A (in terms of solid content), 2 parts of an aqueous dispersion of a commercially available carnauba wax (in terms of solid content), and 30 parts of an aqueous dispersion of kaolin (aspect ratio: 80 to 100 and average particle size: 8 $\mu$m) (solid content concentration 50%) (in terms of solid content) were mixed, and water was added to the resultant mixture to make a solid content concentration be 25%, followed by stirring, to prepare a heat-sealable layer coating material (concentration 25%).

[Example 13]

Heat-sealable paper was obtained in the same manner as in Example 11 except that 60 parts of an aqueous dispersion of the ethylene-acrylic acid copolymer A (in terms of solid content), 10 parts of an aqueous dispersion of a commercially available carnauba wax (in terms of solid content), and 30 parts of an aqueous dispersion of kaolin (aspect ratio: 80 to 100 and average particle size: 8 $\mu$m) (solid content concentration 50%) (in terms of solid content) were mixed, and water was added to the resultant mixture to make a solid content concentration be 25%, followed by stirring, to prepare a heat-sealable layer coating material (concentration 25%).

[Example 14]

Heat-sealable paper was obtained in the same manner as in Example 11 except that 42.85 parts of an aqueous dispersion of the ethylene-acrylic acid copolymer A (in terms of solid content), 14.30 parts of an aqueous dispersion of a commercially available carnauba wax (in terms of solid content), and 42.85 parts of an aqueous dispersion of kaolin (aspect ratio: 80 to 100 and average particle size: 8 $\mu$m) (solid content concentration 50%) (in terms of solid content) were mixed, and water was added to the resultant mixture to make a solid content concentration be 25%, followed by stirring, to prepare a heat-sealable layer coating material (concentration 25%).

[Example 15]

In the same manner as in Example 1, a heat-sealable layer coating material was prepared, and it was applied to the W-surface of an extensible paper cement so that the coating amount of the heat-sealable layer after drying was 12 $g/m^2$, to form a heat-sealable layer with an air knife coater, followed by drying with a dryer at 130 to 160°C, to a final linear pressure of 90 kg/cm, a chilled roll was in contact with the coated surface, and a cotton roll was in contact with the non-coated surface, followed by heating the rolls to 40°C and one-stage super calendering, to obtain heat-sealable paper (F-surface smoothness: 15 seconds and W-surface smoothness: 64 seconds). The heat-sealable paper of Example 15 had higher smoothness of the coated surface and non-coated surface and more excellent printability of the non-coated surface, as compared with the heat-sealable paper of Example 1.

[Example 16]

In the same manner as in Example 3, a heat-sealable layer coating material was prepared, and it was applied to the W-surface of an extensible paper cement so that the coating amount of the heat-sealable layer after drying was 8 $g/m^2$, to form a heat-sealable layer with an air knife coater, followed by drying with a dryer at 130 to 160°C, to a final linear pressure of 90 kg/cm, a chilled roll was in contact with the coated surface, and a cotton roll was in contact with the non-coated surface, followed by heating the rolls to 40°C and one-stage super calendering, to obtain heat-sealable paper (F-surface smoothness: 15 seconds, W-surface smoothness: 52 seconds). The heat-sealable paper of Example 15 had higher smoothness on the coated surface and non-coated surface and more excellent printability on a non-coated surface, as compared with the heat-sealable paper of Example 3.

[Comparative Example 1]

Heat-sealable paper was obtained in the same manner as in Example 1 except that 98 parts of an aqueous dispersion of an ethylene-vinyl acetate copolymer ( Sumikaflex S-470HQ, available from Sumika Chemtex Company, Limited, solid content 55%) (in terms of solid content) and 2 parts of a paraffin wax emulsion (Hidorin L-700, available from Chukyo Yushi Co., Ltd., solid content 30%) (in terms of solid content) were mixed, and water was added to the resultant mixture to make a solid content concentration be 33%, followed by stirring, to prepare a heat-sealable layer coating material (concentration 33%).

[Comparative Example 2]

Heat-sealable paper was obtained in the same manner as in Example 1 except that 98 parts of an aqueous dispersion of a styrene/acrylic copolymer (JONCRYL 70J, available from BASF Japan Ltd., solid content 30%) (in terms of solid content) and 2 parts of a paraffin wax emulsion (Hidorin L-700, available from Chukyo Yushi Co., Ltd., solid content 30%) (in terms of solid content) were mixed, and water was added to the resultant mixture to make a solid content concentration be 33%, followed by stirring, to prepare a heat-sealable layer coating material (concentration 33%).

[Evaluation]

<Measurement of heat sealing peel strength>

One set of two heat-sealable papers was stacked so that heat-sealable layers face each other and heat-sealed using a heat seal tester (TP-701-B, available from TESTER SANGYO CO, LTD.) under the conditions of 150°C, 0.2 MPa, and one second. The heat-sealed test specimens were left standing in a room at a temperature of 23°C ± 1°C and a humidity of 50% ± 2% for 4 hours or more. Subsequently, the test specimen heat-sealed was cut into a width of 15 mm and T-peeled using a tensile tester at a tensile speed of 300 mm/min, and the maximum load recorded was taken as a heat sealing peel strength.

<Measurement of hot tack peeling distance>

The hot tack peeling distance was measured using a heat seal tester (TP-701-B, available from TESTER SANGYO CO., LTD.) and a hot tack measurement jig (TP-704, available from TESTER SANGYO CO., LTD.). Fig. 1 shows a schematic diagram of the measuring devices when seen in the horizontal direction. The pulleys 3A, 3B, 3C, and 3D in Fig. 1 are attached to the hot tack measurement jig. Two heat-sealable papers 1 and 1' cut into a length of 60 cm and a width of 4 cm were stacked so that the heat-sealable layers faced each other, and around the center in the length direction was sandwiched with a commercially available clip 2 to pass the heat-sealable papers 1 and 1' between the pulleys 3A and 3B. Then, the heat-sealable paper 1 was disposed along the upper part of the pulley 3C, and 30 g of a weight 4 was attached to the end thereof. Further, the heat-sealable paper 1' was disposed along the upper part of the pulley 3D, and 30 g of a weight 4' was attached to the end thereof. The heat-sealable papers 1 and 1' were heat-sealed under the conditions of 150°C, 0.2 MPa, and one second, using a heat seal tester and a seal bar 5 with a length of 30 cm and a width of 1 cm. The clip 2 was removed during heat sealing, and at the moment the seal bar 5 was separated (that is, immediately after heat sealing (within one second)), a load was applied in the direction in which the sealed portion was peeled off by the weights 4 and 4' attached in advance. The distance at which the sealed portion peeled was measured, to give a hot tack peeling distance.

<Evaluation of re-disintegration property (pulp recovery rate after re-disintegration)>

Heat-sealable paper with an absolute dry mass of 30 g was torn by hand into 3 to 4 cm squares and immersed in tap water at 20°C overnight. After dilution with tap water to a concentration of the heat-sealable paper of 2.5%, each piece was disintegrated at a rotational speed of 3000 rpm for 20 minutes using a TAPPI standard disintegrator (available from KUMAGAI RIKI KOGYO Co., Ltd.). The pulp slurry obtained was subjected to a flat screen (available from KUMAGAI RIKI KOGYO Co., Ltd.) in which a 6-cut (slit width 0.15 mm) screen plate was set and to screening in a water flow of 8.3 L/min. The undisintegrated material remaining on the screen plate was collected and dried in an oven at 105°C, and the absolute dry mass was measured, to calculate a pulp recovery rate from the following calculation formula:

$$\text{Pulp recovery rate (\%)} = \{\text{absolute dry mass (g) of heat-sealable paper tested} - \text{absolute dry mass (g) of undisintegrated material}\}/\text{absolute dry mass of heat-sealable paper tested} \times 100.$$

<Smoothness>

The Oken smoothness of the heat-sealable paper and the paper substrate was measured according to JIS P8155:2010, to give a smoothness value.

<Processability>

Heat-sealable paper was continuously made into bags using a high-speed horizontal pillow packing machine (a Wrapper FW3410, available from FUJI MACHINERY CO., LTD.). At this time, no contents were put into the bag, but an empty bag was used for molding, and the appearance and the runnability were checked to determine the followings. Here, "continuous bag making was impossible" means a state in which wrinkles were generated, a state in which a bag could not formed due to meandering, or a paper break occurred. In addition, "defective appearance" refers to contamination of wrinkles, misalignment of the sealed portion, or deformation of the bag.

A: Continuous bag making was possible, and the appearance of the bag was good.
B: Continuous bag making was possible, but the appearance of the bag was slightly defective.
C: Continuous bag making was impossible.

Table 1

| | | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Paper substrate | Type | | - | Extensible paper | Extensible paper | Extensible paper | Extensible paper | Extensible paper | Extensible paper | Super extensible paper | Super extensible paper | Super extensible paper | Super extensible paper |
| | Basis weight | | $g/m^2$ | 88 | 88 | 88 | 88 | 88 | 88 | 100 | 100 | 100 | 100 |
| | Geometric mean of $X_1$ and $Y_1$ | | $J/m^2$ | 178 | 178 | 178 | 178 | 178 | 178 | 320 | 320 | 320 | 320 |
| | Ratio of $X_1$ to $Y_1$ ($X_1/Y_1$) | | - | 1.5 | 1.5 | 1.5 | 1.5 | 1.5 | 1.5 | 1.2 | 1.2 | 1.2 | 1.2 |
| | Geometric mean of $X_2$ and $Y_2$ | | J/g | 2.1 | 2.1 | 2.1 | 2.1 | 2.1 | 2.1 | 3.2 | 3.2 | 3.2 | 3.2 |
| Heat-sealable layer | Water-dispersible resin binder | Type | - | Styrene/butadiene | Styrene/butadiene | Ethylene-acrylic acid | Ethylene-acrylic acid | Ethylene-acrylic acid | Ethylene-acrylic acid | Ethylene-acrylic acid | Ethylene-acrylic acid | Ethylene-acrylic acid | Ethylene-acrylic acid |
| | | Glass transition temperature | °C | 18 | 21 | 45-50 | 45-50 | 45-50 | 45-50 | 45-50 | 45-50 | 45-50 | 45-50 |
| | | Amount added | parts by mass | 98 | 98 | 98 | 97 | 86 | 75 | 98 | 97 | 86 | 75 |
| | Lubricant | Type | - | Paraffin wax | Paraffin wax | Carnauba wax | Carnauba wax | Carnauba wax | Carnauba wax | Carnauba wax | Carnauba wax | Carnauba wax | Carnauba wax |
| | | Amount added | parts by mass | 2 | 2 | 2 | 3 | 14 | 25 | 2 | 3 | 14 | 25 |
| | Pigment | Type | - | | | | | | | | | | |
| | | Amount added | parts by mass | | | | | | | | | | |
| | Amount to be applied | | $g/m^2$ | 12 | 12 | 8 | 8 | 8 | 8 | 8 | 8 | 8 | 8 |

(continued)

| | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Heat-sealable paper | Geometric mean of $X_1$ and $Y_1$ | J/m² | 210 | 210 | 204 | 204 | 204 | 204 | 346 | 346 | 346 | 346 |
| | Ratio of $X_1$ to $Y_1$ ($X_1/Y_1$) | - | 1.4 | 1.4 | 1.4 | 1.4 | 1.4 | 1.4 | 1.3 | 1.3 | 1.3 | 1.3 |
| | Geometric mean of $X_2$ and $Y_2$ | J/g | 2.1 | 2.1 | 2.1 | 2.1 | 2.1 | 2.1 | 3.2 | 3.2 | 3.2 | 3.2 |
| | Heat sealing peel strength | N/15mm | 6 | 6 | 6 | 6 | 6 | 6 | 8 | 8 | 8 | 8 |
| | Hot tack peeling distance | mm | 120 | 120 | 10 | 10 | 10 | 10 | 30 | 30 | 30 | 30 |
| | Pulp recovery rate after re-disintegration | % | 98 | 98 | 90 | 90 | 90 | 90 | 90 | 90 | 90 | 90 |
| | Oken smoothness — Coated surface | seconds | 3 | 3 | 3 | 3 | 3 | 3 | 7 | 7 | 7 | 7 |
| | Oken smoothness — Non-coated surface | seconds | 35 | 35 | 41 | 41 | 44 | 47 | 58 | 58 | 58 | 60 |
| | Processability | - | B | B | B | B | B | B | B | B | B | B |

Table 2

| | | Unit | Example 11 | Example 12 | Example 13 | Example 14 | Example 15 | Example 16 | Comparative Example1 | Comparative Example2 |
|---|---|---|---|---|---|---|---|---|---|---|
| Paper substrate | Type | - | One-sided glossy paper | One-sided glossy paper | One-sided glossy paper | One-sided glossy paper | Extensible paper | Extensible paper | Extensible paper | Extensible paper |
| | Basis weight | g/m$^2$ | 70 | 70 | 70 | 70 | 88 | 88 | 88 | 88 |
| | Geometric mean of $X_1$ and $Y_1$ | J/m$^2$ | 71 | 71 | 71 | 71 | 178 | 178 | 178 | 178 |
| | Ratio of $X_1$ to $Y_1$ ($X_1/Y_1$) | - | 0.7 | 0.7 | 0.7 | 0.7 | 1.5 | 1.5 | 1.5 | 1.5 |
| | Geometric mean of $X_2$ and $Y_2$ | J/g | 1.0 | 1.0 | 1.0 | 1.0 | 2.1 | 2.1 | 2.1 | 2.1 |
| Heat-sealable layer | Water-dispersible resin binder — Type | - | Ethylene-acrylic acid | Ethylene-acrylic acid | Ethylene-acrylic acid | Ethylene-acrylic acid | Styrene/butadiene | Ethylene-acrylic acid | Ethylene-vinyl acetate | Styrene-acrylic |
| | Water-dispersible resin binder — Glass transition temperature | °C | 45-50 | 45-50 | 45-50 | 45-50 | 18 | 45-50 | 0 | 102 |
| | Water-dispersible resin binder — Amount added | parts by mass | 69 | 68 | 60 | 42.85 | 98 | 98 | 98 | 98 |
| | Lubricant — Type | - | Carnauba wax | Carnauba wax | Carnauba wax | Carnauba wax | Paraffin wax | Carnauba wax | Paraffin wax | Paraffin wax |
| | Lubricant — Amount added | parts by mass | 1 | 2 | 10 | 14.30 | 2 | 2 | 2 | 2 |
| | Pigment — Type | - | Kaolin | Kaolin | Kaolin | Kaolin | | | | |
| | Pigment — Amount added | parts by mass | 30 | 30 | 30 | 42.85 | | | | |
| | Amount to be applied | g/m$^2$ | 4 | 4 | 4 | 4 | 12 | 8 | 8 | 8 |

EP 4 328 022 A1

(continued)

| | | | Unit | Example 11 | Example 12 | Example 13 | Example 14 | Example 15 | Example 16 | Comparative Example1 | Comparative Example2 |
|---|---|---|---|---|---|---|---|---|---|---|---|
| Heat-sealable paper | Geometric mean of $X_1$ and $Y_1$ | | $J/m^2$ | 74 | 74 | 74 | 74 | 229 | 229 | 205 | 210 |
| | Ratio of $X_1$ to $Y_1$ ($X_1/Y_1$) | | - | 0.7 | 0.7 | 0.7 | 0.7 | 1.4 | 1.4 | 1.4 | 1.4 |
| | Geometric mean of $X_2$ and $Y_2$ | | J/g | 1.0 | 1.0 | 1.0 | 1.0 | 2.3 | 2.3 | 2.1 | 2.1 |
| | Heat sealing peel strength | | N/15mm | 4 | 4 | 4 | 4 | 6.6 | 6.8 | 6 | 1 |
| | Hot tack peeling distance | | mm | 90 | 90 | 90 | 90 | 110 | 10 | 180 | 100 |
| | Pulp recovery rate after re-disintegration | | % | 99 | 99 | 99 | 99 | 98 | 90 | 98 | 98 |
| | Oken smoothness | Coated surface | seconds | 291 | 295 | 300 | 320 | 15 | 15 | 3 | 3 |
| | | Non-coated surface | seconds | 300 | 305 | 302 | 306 | 64 | 52 | 30 | 15 |
| | Processability | | - | B | B | B | B | A | A | B | B |

From Tables 1 and 2, the heat-sealable papers of Examples 1 to 16 had good heat sealing peel strength, high pulp recovery rate after re-disintegration, and small hot tack peeling distance. Meanwhile, the heat-sealable paper of Comparative Example 1 had large hot tack peeling distance. Further, the heat-sealable paper of Comparative Example 2 had poor heat sealing peel strength. Further, Examples 15 and 16 subjected to super calendering had more excellent processability as compared with Examples 1 and 3, while having higher surface smoothness and more excellent printability.

From the aforementioned results, it can be said that the heat-sealable paper of this embodiment is excellent in heat sealing property and recyclability, and capable of enclosing the object to be packaged even immediately after the bag making process.

Reference Signs List

    1, 1': Heat-sealable papers
    2: Clip
    3A, 3B, 3C, and 3D: Pulleys
    4, 4': Weights
    5: Seal bar

**Claims**

1. Heat-sealable paper comprising at least one heat-sealable layer on at least one surface of a paper substrate, wherein

    the heat-sealable layer comprises a water-dispersible resin binder,
    when two such heat-sealable layers are heat-sealed to each other under conditions of 150°C, 0.2 MPa, and one second, a hot tack peeling distance is 150 mm or less, and a heat sealing peel strength is 2 N/15 mm or more, and
    the heat-sealable paper has a pulp recovery rate after re-disintegration of 85% or more.

2. The heat-sealable paper according to claim 1, wherein the water-dispersible resin binder has a glass transition temperature of 5°C or more and 100°C or less.

3. The heat-sealable paper according to claim 1 or 2, wherein the water-dispersible resin binder comprises one or more selected from the group consisting of a styrene/butadiene copolymer and an olefin/unsaturated carboxylic acid copolymer.

4. The heat-sealable paper according to any one of claims 1 to 3, wherein the heat-sealable layer further comprises a lubricant.

5. The heat-sealable paper according to claim 4, wherein the lubricant is at least one selected from the group consisting of carnauba wax and paraffin wax.

6. The heat-sealable paper according to claim 4 or 5, wherein a content of the lubricant in the heat-sealable layer is 0.5 mass% or more and 30 mass% or less.

7. The heat-sealable paper according to any one of claims 1 to 6, wherein an Oken smoothness of a surface of the heat-sealable layer is 10 seconds or more.

8. A packaging bag using the heat-sealable paper according to any one of claims 1 to 7.

[Fig. 1]

## INTERNATIONAL SEARCH REPORT

| International application No. |
|---|
| **PCT/JP2022/018533** |

### A. CLASSIFICATION OF SUBJECT MATTER

*B32B 27/00*(2006.01)i; *B32B 29/04*(2006.01)i; *B65D 65/40*(2006.01)i; *D21H 19/18*(2006.01)i; *D21H 19/20*(2006.01)i; *D21H 19/22*(2006.01)i; *D21H 27/00*(2006.01)i

FI: D21H19/22; D21H27/00 Z; B65D65/40 D; D21H19/20 A; D21H19/18; D21H19/20; B32B27/00 B; B32B29/04

According to International Patent Classification (IPC) or to both national classification and IPC

### B. FIELDS SEARCHED

Minimum documentation searched (classification system followed by classification symbols)

B32B27/00; B32B29/04; B65D65/40; D21H19/18; D21H19/20; D21H19/22; D21H27/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-53400 A (OJI HOLDINGS CORP.) 05 April 2018 (2018-04-05) claims, paragraphs [0001], [0010]-[0026], examples | 1-3, 7-8 |
| A | entire text | 4-6 |
| X | JP 2021-46233 A (HOKUETSU CORP. CO., LTD.) 25 March 2021 (2021-03-25) claims, paragraphs [0001], [0016]-[0030], examples | 1-3, 7-8 |
| A | entire text | 4-6 |
| A | WO 2013/069704 A1 (TOPPAN PRINTING CO., LTD.) 16 May 2013 (2013-05-16) entire text | 1-8 |
| A | JP 2002-293365 A (NIPPON JOHO YOUSHI KAKO KK and 1 other) 09 October 2002 (2002-10-09) entire text | 1-8 |
| A | JP 9-295383 A (DAINIPPON PRINTING CO., LTD.) 18 November 1997 (1997-11-18) entire text | 1-8 |

☑ Further documents are listed in the continuation of Box C.    ☑ See patent family annex.

| \* | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 July 2022** | **12 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2022/018533** |

### C. DOCUMENTS CONSIDERED TO BE RELEVANT

| Category* | Citation of document, with indication, where appropriate, of the relevant passages | Relevant to claim No. |
|---|---|---|
| A | JP 7-507504 A (INTERNATIONAL PAPER CO.) 24 August 1995 (1995-08-24)<br>entire text | 1-8 |
| A | JP 7-502463 A (INTERNATIONAL PAPER CO.) 16 March 1995 (1995-03-16)<br>entire text | 1-8 |
| A | JP 10-157279 A (MITSUBISHI PAPER MILLS LTD.) 16 June 1998 (1998-06-16)<br>entire text | 1-8 |
| A | JP 2000-109007 A (NIPPON PAPER INDUSTRIES CO., LTD.) 18 April 2000 (2000-04-18)<br>entire text | 1-8 |

Form PCT/ISA/210 (second sheet) (January 2015)

## INTERNATIONAL SEARCH REPORT
### Information on patent family members

International application No.

**PCT/JP2022/018533**

| Patent document cited in search report | | | Publication date (day/month/year) | Patent family member(s) | | | Publication date (day/month/year) |
|---|---|---|---|---|---|---|---|
| JP | 2018-53400 | A | 05 April 2018 | (Family: none) | | | |
| JP | 2021-46233 | A | 25 March 2021 | (Family: none) | | | |
| WO | 2013/069704 | A1 | 16 May 2013 | US | 2014/0242450 | A1 | |
| | | | | whole document | | | |
| | | | | EP | 2779268 | A1 | |
| | | | | CN | 103918100 | A | |
| | | | | KR | 10-2014-0099447 | A | |
| | | | | KR | 10-2019-0014115 | A | |
| | | | | TW | 201323200 | A | |
| | | | | CN | 110077038 | A | |
| | | | | JP | 2014-78513 | A | |
| | | | | JP | 2018-170290 | A | |
| JP | 2002-293365 | A | 09 October 2002 | (Family: none) | | | |
| JP | 9-295383 | A | 18 November 1997 | (Family: none) | | | |
| JP | 7-507504 | A | 24 August 1995 | US | 5380694 | A | |
| | | | | whole document | | | |
| | | | | WO | 1993/024331 | A1 | |
| | | | | EP | 643646 | A1 | |
| | | | | DE | 69308844 | T2 | |
| | | | | AT | 149922 | T | |
| | | | | CA | 2136827 | A | |
| | | | | ES | 2098755 | T | |
| JP | 7-502463 | A | 16 March 1995 | US | 5451559 | A | |
| | | | | whole document | | | |
| | | | | WO | 1993/008030 | A1 | |
| | | | | EP | 609323 | A1 | |
| | | | | DE | 69211706 | C | |
| | | | | ES | 2088598 | T | |
| | | | | AT | 139484 | T | |
| JP | 10-157279 | A | 16 June 1998 | (Family: none) | | | |
| JP | 2000-109007 | A | 18 April 2000 | (Family: none) | | | |

Form PCT/ISA/210 (patent family annex) (January 2015)

## REFERENCES CITED IN THE DESCRIPTION

**Patent documents cited in the description**

- JP 6619964 B

**Non-patent literature cited in the description**

- Pulp-Freeness test method-Chapter 2: Canadian standard freeness method. *JIS P 8121-2,* 2012